# EUROPEAN PATENT APPLICATION

(11) **EP 4 606 618 A1**
(43) Date of publication of application: **27.08.2025**
(21) Application number: 25158810.9
(22) Date of filing: 19.02.2025
(51) Int. Cl.: B60K 26/02

(54) **DEVICE FOR CONTROLLING THE ACCELERATION OF A VEHICLE**

(30) Priority: 20.02.2024 IT 202400000739 U
(71) Applicant: Guidosimplex S.r.l., 00166 Roma (IT)
(72) Inventor: VENTURINI, Sandro, 00135 Roma (RM) (IT)
(74) Representative: Biallo, Dario

(57) **Abstract**

Device for controlling the acceleration and/or deceleration of a vehicle, having a steering wheel rotatable around a rotation axis, comprising a support rigidly connectable to the steering wheel, a little wheel supported by the support in such a way that, in use, it can translate with respect to the support substantially parallel to the rotation axis, and a transducer configured to convert a translation of the little wheel with respect to the support into a control signal for the acceleration and deceleration of the vehicle, characterized in that the support is rigidly connectable to an operation crown of the steering wheel in such a way as to at least partially overlap, in use, with the operation crown parallel to the rotation axis.

## Description

The present invention relates to a device for controlling the acceleration and/or deceleration of a vehicle, and in particular to a device also usable by people suffering from lower limb disabilities to drive a motor vehicle. In recent years, numerous solutions have been proposed to allow also people suffering from lower limb disabilities to drive motor vehicles. The Applicant itself has previously developed a device capable of controlling the acceleration of a motor vehicle using only the hands and therefore, unlike the conventional accelerator pedal, also usable by people suffering from lower limb disabilities.

In particular, such known device comprises a support bracket connectable to the central body of the steering wheel of the motor vehicle and a little wheel supported by the bracket in such a way that it is positioned in front of the steering wheel and can be moved by the driver with respect to the bracket towards and away from the steering wheel. The known device further comprises a potentiometer configured to control the acceleration of the motor vehicle based on the detected movement of the little wheel with respect to the bracket.

In more detail, the bracket of the known device is L-shaped and is fixed to the steering wheel by housing a first arm in a dedicated vertical seat made on the upper surface of the central body of the steering wheel, while a second arm protrudes towards the driver between the central body and the operation crown of the steering wheel, and supports the little wheel in front of the steering wheel itself.

Although such solution allows an effective control of the vehicle using only the hands, during installation, it requires a machining operation to be performed on the steering wheel to make the above-mentioned seat and allow the bracket to be fixed to the steering wheel itself. Furthermore, the bracket of the known device at least partially obstructs the view of the dashboard of the motor vehicle, as it occupies part of the space between the central body of the steering wheel and the operation crown, limiting the ability of the driver to monitor the instrumentation of the dashboard itself.

The object of the present invention is to overcome the above-mentioned drawbacks, and in particular to make a device for controlling the acceleration and/or deceleration of a vehicle that is simple and quick to install and allows the dashboard to be completely monitored.

This and other results are achieved according to the present invention by making a device according to claim 1.

Further features of the device are the object of the dependent claims.

The present invention will now be described, by way of illustration but not limitation, according to its preferred embodiments, with reference to the attached drawings, in which:
- Figure 1 is a front view of a device according to the present invention, connected to the steering wheel of a vehicle;
- Figure 2 is a side view of Figure 1;
- Figure 3 is an exploded perspective view of Figure 1 from a different observation point.

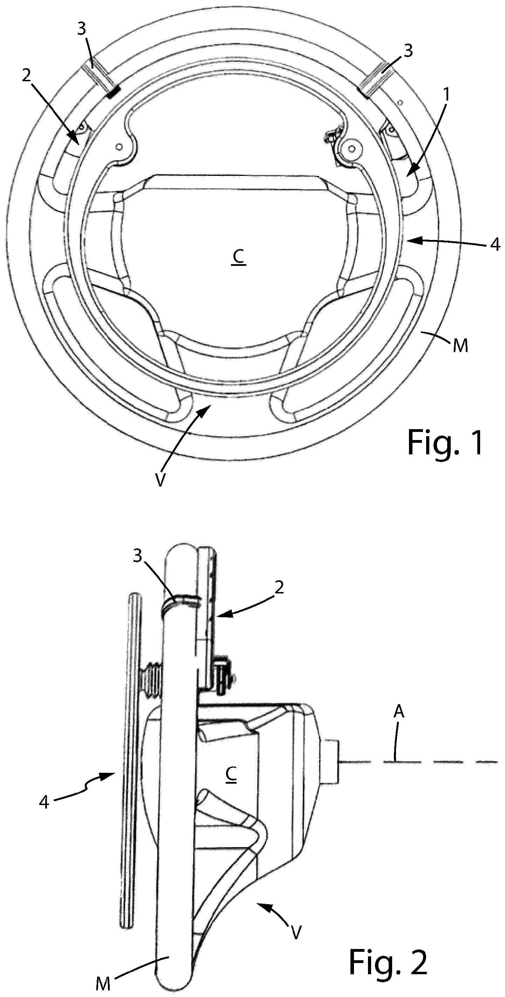

With reference to Figure 1, a device for controlling the acceleration and/or deceleration (or braking) of a vehicle is overall indicated by 1. In figures, only a steering wheel V for the operation of the vehicle is represented, which comprises a central body C and an operation crown M; the steering wheel V is rotatable, as known, about a rotation axis A, visible in Figure 2, by acting on the related operation crown M.

Firstly, the device 1 comprises a support 2, configured to be connectable to the operation crown M of the steering wheel V in such a way as to be rigidly connected to it and in such a way as to at least partially overlap with the operation crown M itself when viewed along an observation line parallel to the rotation axis A.

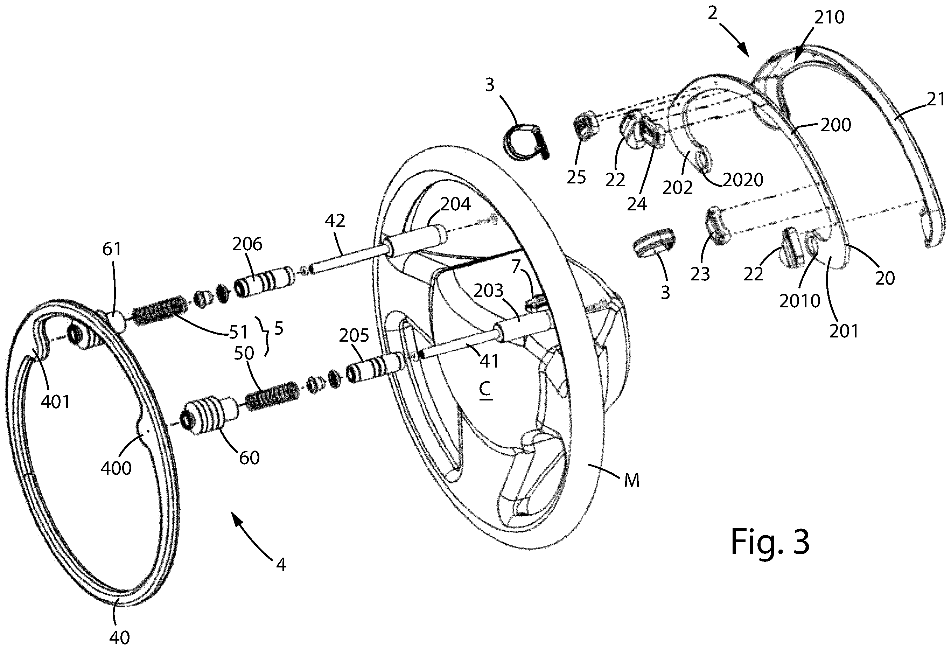

With reference to Figure 3, the support 2 comprises a support element 20; such support element 20 is connectable to the operation crown M in such a way as to be partially hidden behind the operation crown M itself for a driver placed in front of the steering wheel V. In particular, the support element 20 comprises a curved connection portion 200 and two support portions 201, 202, arranged at the opposite ends of the connection portion 200: when the support 2 is connected to the steering wheel V, the connection portion 200 is entirely hidden (in the sense described above, i.e. for a driver placed in front of the steering wheel V) behind the operation crown M, and the support portions 201, 202 protrude substantially radially towards the rotation axis A, being visible.

The support element 20 further comprises two bearing holders 203, 204, fixed to the two support portions 201, 202: such bearing holders 203, 204 define two cylindrical seats which, when the support 2 is connected to the steering wheel V, extend substantially parallel to the rotation axis A. The bearing holders 203, 204 can, for example, have a cylindrical shape and have a thread on the outer surface, in such a way that they are fixed by screwing in two threaded holes 2010, 2020, made in the support portions 201, 202.

The support element 20 further comprises two linear ball bearings 205, 206, housed in the seats defined in the bearing holders 203, 204.

The support 2 further comprises a cover 21 that covers the support element 20. More specifically, the cover 21 has a recess 210, whose shape is substantially similar to that of the support element 20, in such a way that the support element 20 can be housed therein. The cover 21 is connected to the support element 20, for example by connecting screws, in such a way that, when the support 2 is connected to the steering wheel V, the support element 20 itself is covered on all sides and not visible to the driver, being enclosed between the operation crown M and the cover 21.

The connection between the support element 20 and the cover 21 can be made particularly stable by also screwing support spacers 22 thereto, in such a way that the support element 20 is clamped between the cover 21 and the support spacers 22.

The device 1 further comprises toothed straps 3, configured to fix the support element 20, and therefore the entire support 2, to the operation crown M. For this purpose, the support 2 can comprise strap holders 23, 24, 25, screwed to the support element 20, each of which has a hole through which a strap 3 can be passed.

Still with reference to Figure 3, the device 1 further comprises a little wheel 4, supported by the support 2 in such a way that, when the support 2 is connected to the steering wheel V, it can translate with respect to the support 2 itself, substantially parallel to the rotation axis A. In particular, the little wheel 4 is capable of translating between a rest position, in which it is at a maximum distance from the steering wheel V (and therefore closer to the driver), and an extreme operating position, in which it is at a minimum distance from the steering wheel V (and therefore farther from the driver).

The little wheel 4 comprises an operation portion 40, configured to be handled by the driver. The operation portion 40 has an annular shape, so that, when the support 2 is connected to the steering wheel V, it is concentric with the steering wheel V. The operation portion 40 has two protrusions 400, 401, directed radially inward, which can be used by the driver to push the little wheel 4 with their thumbs towards the extreme operating position.

The little wheel 4 further comprises two pins 41, 42, which, when the support 2 is connected to the steering wheel V, extend parallel to the rotation axis A. The pins 41, 42 are fixed to the protrusions 400, 401 on the side opposite to the driver and slidingly engage the cylindrical seats of the bearing holders 203, 204, sliding along the bearings 205, 206. In this way, the bearing holders 203, 204 act as guides for the translation movement of the little wheel 4 with respect to the support 2.

The device 1 further comprises elastic means 5, configured to force the little wheel 4 towards the rest position. In particular, the elastic means 5 comprise two springs 50, 51, wound about the pins 41, 42.

The device 1 further comprises two bellows 60, 61, which wind the springs 50, 51, hiding them.

The device 1 further comprises a transducer 7, configured to convert a detected translation movement of the little wheel 4 with respect to the support 2 into a control signal for the acceleration and/or deceleration of the vehicle. The transducer 7 is preferably fixed to the support 2 and consists of a potentiometer.

In use, the device 1 is connected to the steering wheel V using the straps 3, as represented in Figures 1 and 2. In order to control the acceleration and/or deceleration of the vehicle, the user presses the little wheel 4 towards the steering wheel V: the translation movement of the little wheel 4 is converted by the transducer 7 in an electrical signal, which is sent to the electronic control unit of the car to control the acceleration and/or deceleration of the vehicle. The greater the magnitude of the translation of the little wheel 4 towards the extreme operating position, the greater the controlled acceleration and/or deceleration.

It is therefore clear that the device 1 according to the invention allows to achieve the prefixed objects. In particular, the device 1 is quickly and easily connectable to the steering wheel V, since using the straps 3 allows to avoid the need to perform machining operations on the steering wheel V.

Furthermore, as seen in Figure 1, the view of the dashboard is ensured through the space between the operation crown M and the central body C of the steering wheel V, since the device 1 is fixed to the operation crown M, and only the little wheel 4 is visible to the user, and therefore the dashboard instrumentation can be completely monitored.

The present invention has been described by way of illustration but not limitation, according to its preferred embodiments, but it is understood that variations and/or modifications can be made by a person skilled in the art, without departing from the related scope of protection as defined in the attached claims.

## Claims

1. Device (1) for controlling the acceleration and/or deceleration of a vehicle having a steering wheel (V) rotatable around a rotation axis (A), comprising a support (2) rigidly connectable to said steering wheel (V), a little wheel (4) supported by said support (2) in such a way that, in use, it can translate with respect to said support (2) substantially parallel to said rotation axis (A), and a transducer (7) configured to convert a translation of said little wheel (4) with respect to said support (2) into a control signal for the acceleration and/or deceleration of said vehicle, **characterized in that** said support (2) is rigidly connectable to an operation crown (M) of said steering wheel (V) in such a way as to at least partially overlap, in use, with said operation crown (M) parallel to said rotation axis (A).

2. Device (1) according to claim 1, **characterized in that** said support (2) comprises a support element (20) rigidly connectable to said operation crown (M) in such a way as to overlap with said operation crown (M) on the opposite side of said steering wheel (V) with respect to a driver of said vehicle.

3. Device (1) according to claim 2, **characterized in that** said support (2) comprises a cover (21) that covers said support element (20) when connected to said operation crown (M).

4. Device (1) according to any one of the preceding claims, **characterized by** comprising at least one strap (3) configured to connect said support (2) to said operation crown (M).

5. Device (1) according to any one of the preceding claims, **characterized in that** said support (2) comprises two seats extending, in use, substantially parallel to said rotation axis (A) and configured to guide said translation of said little wheel (4), said little wheel (4) comprising two pins (41, 42) that slidingly engage said seats.

6. Device (1) according to claim 5, **characterized in that** said support (2) comprises two linear ball bearings (205, 206) housed in said seats.

7. Device (1) according to any one of the preceding claims, **characterized in that** said little wheel (4) can translate, in use, with respect to said support (2) between a rest position, in which it is arranged at a maximum distance from said steering wheel (V), and an extreme operating position, in which it is arranged at a minimum distance from said steering wheel (V), and **in that** it comprises elastic means (5) configured to force said little wheel (4) towards said rest position.

8. Device (1) according to any one of the preceding claims, **characterized in that** said transducer (7) comprises a potentiometer.
